# EUROPEAN PATENT SPECIFICATION

(11) **EP 4 199 569 B1**
(45) Date of publication and mention of the grant of the patent: **11.11.2026**
(21) Application number: 21855570.4
(22) Date of filing: 11.08.2021
(51) Int. Cl.: H04W 24/02, H04B 7/06, H04W 48/00

(54) **CANDIDATE BEAM MEASUREMENT METHOD AND APPARATUS, AND TERMINAL**
KANDIDATENSTRAHLMESSVERFAHREN UND -VORRICHTUNG SOWIE ENDGERÄT
PROCÉDÉ ET APPAREIL DE MESURE DE FAISCEAU CANDIDAT, ET TERMINAL

(30) Priority: 14.08.2020 CN 202010820248
(43) Date of publication of application: 21.06.2023
(73) Proprietor: Vivo Mobile Communication Co., Ltd., Dongguan, Guangdong 523863 (CN)
(72) Inventor: YANG, Yu, Dongguan, Guangdong 523863 (CN); WU, Yumin, Dongguan, Guangdong 523863 (CN)
(74) Representative: Murgitroyd & Company
(86) International application number: PCT/CN2021/112072
(87) International publication number: WO 2022/033519

(56) References cited:
- WO-A1-2020/242696
- CN-A- 109 474 952
- CN-A- 110 581 725
- CN-A- 110 611 931
- CN-A- 110 611 931
- CN-A- 110 958 632
- CN-A- 111 182 578
- MEDIATEK INC: "Offline discussion summary on remaining issues on Beam Failure Recovery", vol. RAN WG1, no. Reno, USA; 20171127 - 20171201, 4 December 2017 (2017-12-04), XP051370777, Retrieved from the Internet <URL:http://www.3gpp.org/ftp/tsg%5Fran/WG1%5FRL1/TSGR1%5F91/Docs/> [retrieved on 20171204]
- APPLE INC: "Feature lead summary #2 on L1-SINR and SCell BFR", vol. RAN WG1, no. Prague, Czech Republic; 20190826 - 20190830, 3 September 2019 (2019-09-03), XP051766336, Retrieved from the Internet <URL:http://www.3gpp.org/ftp/tsg_ran/WG1_RL1/TSGR1_98/Docs/R1-1909743.zip> [retrieved on 20190903]

## Description

### TECHNICAL FIELD

This application pertains to the field of communications technologies, and specifically relates to a candidate beam measurement method and apparatus, and a terminal.

### BACKGROUND

When a beam failure occurs in a secondary cell (Secondary Cell, SCell), a terminal (User Equipment, UE) reports a beam failure recovery request (Beam failure recovery Request, BFRQ), that is, a BFR MAC CE (Medium Access Control Control Element, media access control control element), to a network side. In this BFR MAC CE, the terminal reports, to the network side, an identifier of a detected candidate beam (candidate beam) whose quality exceeds a preset threshold. However, in the prior art, after a network side configures a reference signal (Reference Signal, RS) of a candidate beam through RRC signaling, no specific measurement behaviors of UE are defined, for example, when the measurement is started is not defined. This leads to the following problems: (1) UE continuously measures a candidate beam when channel conditions are good and no beam failure occurs for a long term, thus increasing power consumption of the UE; and (2) UE starts measurement only after determining that a beam failure has occurred in a cell. In this case, the UE may not complete the measurement of the candidate beam when uplink resources used for sending a BFR MAC CE are usable. As a result, an ID of an optimal candidate RS that meets a quality requirement cannot be reported; or none of the candidate beams that have been measured meet a quality requirement, and a new beam for beam recovery cannot be found.

Document R1-1721699 discloses when a new candidate beam is detected, then a 1bit is introduced to indicate whether or not to report the new candidate beam, provided that failure beam reporting is supported.

Document R1-1909743 discloses that: For SCell BFR, support to transmit the MAC CE for BFR in any PUSCH. The detail format for MAC CE for BFR, and whether to transmit a MAC CE to carry BFRQ information for 1 SCell or multiple SCells is up to RAN2.

Document CN 110611931 A discloses that, receiving configuration information sent by a network device, the configuration information is used to indicate a detection start time of a candidate beam; determine the detection start time of the candidate beam according to the configuration information.

### SUMMARY

Embodiments of this application provide a candidate beam measurement method and apparatus, and a terminal to solve the problem that a terminal cannot report an accurate candidate beam measurement result to a network-side device because an existing protocol does not define a time point for a terminal to measure a candidate beam in such that the terminal probably has not completed the measurement when a measurement result needs to be reported.

According to a first aspect, a candidate beam measurement method is provided, which is defined in claim 1.

According to a second aspect, a terminal is provided, which is defined in claim 9.

According to a third aspect, a readable storage medium is provided, which is defined in claim 10.

According to a fourth aspect, a computer software product is provided, which is defined in claim 11.

Further advantageous embodiments of the present disclosure are indicated in the dependent claims. It is to be understood that both the foregoing general description and the following detailed description are exemplary only, and are not restrictive of the present disclosure.

### BRIEF DESCRIPTION OF DRAWINGS

FIG. 1 is a block diagram of a wireless communications system to which the embodiments of this application may be applied;
FIG. 2 is a flowchart of a candidate beam measurement method according to an embodiment of this application;
FIG. 3 is a schematic structural diagram of a candidate beam measurement apparatus according to an embodiment of this application;
FIG. 4 is a schematic structural diagram of a communications device according to an embodiment of this application; and
FIG. 5 is a schematic diagram of a hardware structure of a terminal for implementing the embodiments of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

The terms "first", "second", and the like in this specification and claims of this application are used to distinguish between similar objects rather than to describe a specific order or sequence. It should be understood that the data used in such a way is interchangeable in appropriate circumstances so that the embodiments of this application can be implemented in other orders than the order illustrated or described herein. Moreover, the objects distinguished by "first" and "second" are usually of one type, and the number of objects is not limited. For example, the first object may be one or more than one. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, the new radio (New Radio, NR) system is described for illustration purposes, and NR terms are used in most of the following descriptions, although these technologies may also be applied to other applications than the NR system application, for example, 6-th generation (6^{th} Generation, 6G) communications systems.

For ease of understanding, the following describes some content in the embodiments of the present invention:

### I. Beam failure recovery (Beam Failure Recovery, BFR) mechanism

In a high-band communications system, because a wavelength of a wireless signal is short, signal propagation is likely to be blocked, resulting in interruption of signal propagation. If radio link reestablishment is performed, it takes a long time. For that reason, a PCell (Primary Cell, primary cell) BFR mechanism and a SCell (Secondary Cell, secondary cell) BFR mechanism are introduced.

SCell BFR is mainly used for a multi-carrier scenario (which may be understood as carrier aggregation (Carrier Aggregation, CA), where there are a plurality of carriers (Carrier) or a plurality of component carriers (Component Carrier, CC) or a plurality of cells (cell)), in which there is one primary cell (for example, PCell in a master cell group (Master Cell Group, MCG) or primary secondary cell (Primary Secondary cell, PSCell) in a secondary cell group (Secondary Cell Group, SCG)) and at least one SCell.

### I. Beam failure detection (Beam Failure Detection, BFD)

(1) BFD is performed on each SCell, that is, measurement is performed for a BFD reference signal RS, where a BFD parameter is configured per BWP per cell, which may be specifically:
   1: procedure on BFD for each BFI; and
   2: interval for BFI and corresponding parameter,
      i.e. beamFailureInstanceMaxCount.
(2) The BFD RS (Reference Signal, reference signal) can meet at least one of the following:
   quantity: each BWP may correspond to a maximum of two BFD RSs;
   explicit configuration: the BFD RS is on a current CC;
   implicit configuration: the BFD RS may be on an active (active) bandwidth part (Bandwidth Part, BWP) of a current CC or another CC (if more than 2 CORESETs are configured, BFD RS(s) is/are selected, by using UE implementation, from RSs configured in a TCI state of a control resource set (Control resource set, CORESET) corresponding to the active BWP of the current CC); and
   BFD BLER threshold: default value of rlmInSyncOutOfSyncThreshold.

### II. Candidate beam (Candidate beam)

(i) Configuration
   (1) if SCell BFR has been configured, a candidate beam RS has to be configured;
   (2) the maximum number of candidate beam RSs corresponding to each BWP is 64;
   (3) a candidate beam RS may be based on SSB and CSI-RS for beam management; and
   (4) a candidate beam RS may be on an active BWP of a CC for monitoring BFD RS, or on an active BWP of another CC on the same band.
(ii) Threshold
   (1) a range of a threshold of candidate beam identification is based on the range specified in RSRP-Range;
   (2) when SCell BFR has been configured and candidate beam RS has been configured, the threshold of candidate beam RS is always configured; and
   (3) if failure occurs on one SCell, when L1-RSRP with no candidate beam RS is higher than the configured threshold, UE reports that no candidate beam is identified on the SCell.

### III. Beam failure recovery request (Beam failure recovery request, BFRQ)

### (i) Process

If uplink resources are usable for new transmission, such uplink resources are used for sending BFR MAC CE.

Further, if PUCCH-BFR (or link recovery request (LRR)) has been configured, PUCCH-BFR is sent to request uplink resources.

Further, if no PUCCH-BFR has been configured, or the maximum number of transmissions of the PUCCH-BFR has been reached, the UE triggers a random access channel (Random Access Channel, RACH) procedure (performs contention-based random access (contention-based random access, CBRA) on PCell) similar to that in 3GPP Release 15.

(ii) Configuration of PUCCH-BFR
(1) PUCCH-BFR is configured on PCell/PSCell;
(2) if a PUCCH group has been configured, PUCCH-BFR may be configured on PUCCH-SCell;
(3) for one UE, in each PUCCH group, a maximum of one PUCCH-BFR resource is configured for one BWP; and
(4) PUCCH-BFR may be set to PUCCH format 0 or PUCCH format 1.

(iii) BFR MAC CE
(1) uplink grant of any serving cell may be used; and
(2) failed CC index + new candidate beam index is reported, where for one SCell, only one beam index is reported.

### IV. Beam failure recovery response (Beam failure recovery response, BFRR)

(i) For a PDCCH with PUSCH scheduled, its DCI format uses the same HARQ procedure number as a PUSCH carrying BFR MAC CE.
(ii) When receiving the BFRR, UE considers that the BFR procedure is completed.
   The response to the PUCCH-BFR may be a conventional uplink grant carrying a cell radio network temporary identifier (Cell Radio Network Temporary Identifier, C-RNTI)/modulation and coding scheme cell radio network temporary identifier (Modulation and coding scheme Cell Radio Network Temporary Identifier, MCS-C-RNTI).
(iii) Other channel beam reset

After receiving K=28 symbols following BFRR, UE may perform at least one of the following:
(1) when monitoring PDCCHs in all CORESETs on SCell indicated by MAC CE, using new beam; and
(2) for PUCCHs, if (PUCCH-spatialRelationInfo is configured) & (PUCCHs carrying LRR are not sent or are sent on PCell or PSCell) & (SCell indicated by MAC CE includes PUCCH-SCell), using new beam.

It should be noted that, in this embodiment of this application, the related beam information may also be referred to as: spatial relation (spatial relation) information, spatial domain transmission filter (spatial domain transmission filter) information, spatial filter (spatial filter) information, transmission configuration indicator (Transmission Configuration Indicator, TCI) state information, quasi co-location (Quasi co-location, QCL) information, a QCL parameter, or the like. Downlink beam information may be usually represented by using transmission configuration indicator state information or quasi co-location information. Uplink beam information may be usually represented by using spatial relation information.

In addition, in this embodiment of this application, the related antenna panel may also be referred to as: an antenna group, an antenna port group, an antenna set, an antenna port set, a beam set, a beam sub-set, an antenna array, an antenna port array, an antenna sub-array, an antenna port sub-array, a logical entity, an entity, an antenna entity, or the like.

The identifier of the panel (Panel) may be: an antenna panel identifier, a reference signal resource identifier, a reference signal resource set identifier, a TCI state identifier, a QCL information identifier, a spatial relation identifier, and the like.

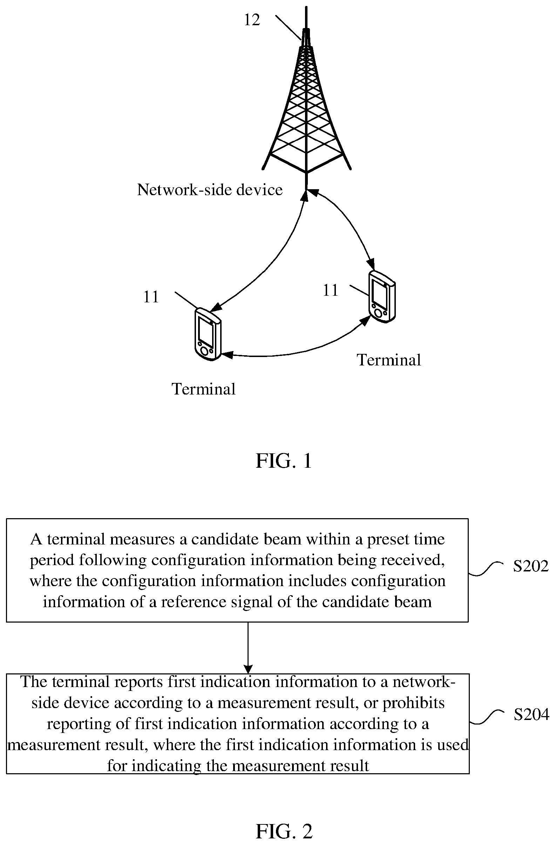

FIG. 1 is a block diagram of a wireless communications system to which the embodiments of this application may be applied. The wireless communications system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), a wearable device (Wearable Device), a vehicular user equipment (vehicle user equipment, VUE), or a pedestrian user equipment (pedestrian user equipment, PUE). The wearable device includes a bracelet, a headphone, glasses, and the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (evolved Node B, eNB), a home NodeB, a home evolved NodeB, a WLAN (wireless local area network, WLAN) access point, a wireless fidelity (wireless fidelity, Wi-Fi) node, a transmission reception point (Transmitting Receiving Point, TRP), or some other appropriate terms in the art. The base station is not limited to a specific technical term as long as the same technical effect is achieved. It should be noted that the base station in the NR system is taken merely as an example in the embodiments of this application, but the base station is not limited to any specific type.

The following describes in detail the candidate beam measurement method provided in the embodiments of this application through specific embodiments and application scenarios thereof with reference to the accompanying drawings.

An embodiment of this application provides a candidate beam measurement method. FIG. 2 is a flowchart of a candidate beam measurement method according to an embodiment of this application. As shown in FIG. 2, the method includes the following steps.

Step S202: A terminal measures a candidate beam within a preset time period following configuration information being received, where the configuration information includes configuration information of a reference signal of the candidate beam.

Step S204: The terminal reports first indication information to a network-side device according to a measurement result, or prohibits reporting of first indication information according to a measurement result, where the first indication information is used for indicating the measurement result.

Based on the foregoing steps S202 and S204, the terminal measures the candidate beam within the preset time period following configuration information being received, meaning that a time point for the terminal to measure a candidate beam has been specified, such that the terminal measures the candidate beam within the specified time period to obtain an actual measurement result, and then reports the measurement result or prohibits reporting of the first indication information. To be specific, the terminal may not report the first indication information according to the measurement result so as to avoid inaccurate reported information; or if the terminal reports a measurement result, the terminal reports the first indication information used for indicating the measurement result obtained within the preset time period, that is, reporting an accurate measurement result. This solves the problem that a terminal cannot report an accurate candidate beam measurement result to the network-side device because an existing protocol does not define a time point for the terminal to measure a candidate beam such that the terminal probably has not completed the measurement when the measurement result needs to be reported.

In an optional implementation of this embodiment of this application, the preset time period in this embodiment of this application may include the following cases.

Case 1: The preset time period in this embodiment of this application includes a first time period.

A start time point of the first time period is a time point of the configuration information being received, or the start time point of the first time period is a time point following first preset duration that starts from the configuration information being received; and an end time point of the first time period is a time point of the first indication information being reported by the terminal, or the end time point of the first time period is determined according to first measurement stop indication information received, where the first measurement stop indication information is used for indicating the terminal to stop measurement immediately after the first measurement stop indication information is received by the terminal, or used for indicating the terminal to stop measurement in second preset duration after the first measurement stop indication information is received by the terminal.

In case 1, that the terminal performs the measurement of the candidate beam within the first time period may be determining a measurement time point on the basis of the time point of the configuration information being received; and performing the measurement of the candidate beam immediately when the configuration information is received, or performing the measurement of the candidate beam in the first preset duration after the configuration information is received. A measurement end time point within the first time period may be determined based on the first measurement stop indication information received, where a time point of the first measurement stop measuring indication information being received may be used as the end time point; or the measurement may be stopped after the second preset duration within which the first measurement stop indication information is received. It can be learned that in this embodiment of this application, the start time point of the first time period may be defined in advance, and the end time point of the first time period may be indicated by the network-side device or defined by a protocol. As for how the start time point and end time point are defined, corresponding configuration or selection may be performed depending on an actual case in the specific application scenario of the embodiments of this application, which is not limited in this application.

Case 2: The preset time period includes a second time period.

A start time point of the second time period is determined according to measurement start indication information received, and an end time point of the second time period is determined according to second measurement stop indication information received, or the end time point of the second time period is a time point of the first indication information being reported by the terminal.

The measurement start indication information is used for indicating the terminal to start measurement immediately after the measurement start indication information is received by the terminal, or used for indicating the terminal to start measurement in third preset duration after the measurement start indication information is received by the terminal; and the second measurement stop indication information is used for indicating the terminal to stop measurement immediately after the second measurement stop indication information is received by the terminal, or used for indicating the terminal to stop measurement in fourth preset duration after the second measurement stop indication information is received by the terminal.

In case 2, the start time point of the second time period may be determined based on measurement start indication information sent by the network-side device; and the end time point of the second time period may be determined based on second measurement stop indication information sent by the network-side device, or the measurement may be stopped at a time point of the first indication information being reported by the terminal. If the terminal continues measurement after the time point of the first indication information being reported, the measurement result of this time is the result to be reported next time. Therefore, it can be defined in advance that the time point of measurement being stopped by the terminal may be the time point of the first indication information being reported. Certainly, the time point of the measurement being stopped that is indicated by the second measurement stop indication information cannot be later than the time point of the first indication information being reported.

Based on the measurement start indication information, the first measurement stop indication information, and the second measurement stop indication information in the foregoing cases 1 and 2, that the terminal measures a candidate beam within a preset time period following the configuration information being received in the step S202 of this embodiment of this application may include the following steps.

Step S202-11: The terminal receives the measurement start indication information and the measurement stop indication information that are sent by the network-side device, where the measurement stop indication information includes the first measurement stop indication information or the second measurement stop indication information.

Step S202-12: The terminal measures the candidate beam within the preset time period according to indications of the measurement start indication information and the measurement stop indication information.

The measurement start indication information and the measurement stop indication information are carried by at least one of the following: radio resource control (Radio Resource Control, RRC) signaling, media access control control element MAC CE signaling, and downlink control information (Downlink Control Information, DCI).

Case 3: The preset time period includes a third time period.

A start time point of the third time period is a start time point of fifth preset duration preceding the first indication information being reported by the terminal, and duration of the third time period is the fifth preset duration; and an end time point of the third time period is a time point of the first indication information being reported by the terminal.

It should be noted that the fifth preset duration may be determined by using a timer, to be specific, the start time point of the fifth preset duration preceding the first indication information being reported by the terminal is the time point at which the timer starts. If the timing exceeds the fifth preset duration, the timer times out. In other words, in case 3, a measurement start time point or a measurement end time point is not indicated by the network-side device, but the measurement start time point and measurement end time point of the third time period may be determined by using a timer. The start time point of the third time period may be after occurrence of beam failure being determined by the terminal.

Case 4: The preset time period includes a fourth time period.

A start time point of the fourth time period is a time point of occurrence of beam failure being determined by the terminal, or the start time point of the fourth time period is an end time point of sixth preset duration that starts from the occurrence of beam failure; duration of the fourth time period is the sixth preset duration; and an end time point of the fourth time period is an end time point of seventh preset duration that starts from occurrence of beam failure being determined by the terminal, or the end time point of the fourth time period is a time point of the first indication information being reported by the terminal.

In case 4, the sixth preset duration may also be determined by using a timer, to be specific, on the basis of the time point of occurrence of beam failure being determined, the time point of the occurrence of beam failure or the end time point of the sixth preset duration that starts from the occurrence of beam failure is used as the measurement start time point, and the timer starts at this point. The end time point of the seventh preset duration that starts from the occurrence of beam failure being determined by the terminal or the time point of the first indication information being reported is used as the measurement end time point, and the timer times out at this point.

It should be noted that the time point of the first indication information being reported in the foregoing cases 1 to 4 may be at least one of the following: a time point of assembling a media access control MAC protocol data unit (protocol data unit, PDU), and a sending time point of reporting a physical uplink shared channel PUSCH that carries bearer beam failure recovery request BFRQ information.

In an optional implementation of this embodiment of this application, that the terminal measures a candidate beam in step S202 may include: measuring, by the terminal, quality of a reference signal resource of the candidate beam.

To be specific, in this embodiment of this application, the measurement of the candidate beam may further be: measuring the quality of the reference signal resource of the candidate beam, and then reporting the first indication information to the network-side device according to the measurement result. That the terminal reports the first indication information to the network-side device according to the measurement result in step S204 may further include the following steps.

Step S204-11: In a case that a reference signal that is of the candidate beam and meets a preset condition is detected, the terminal reports, to the network-side device, the first indication information for indicating an identifier of the reference signal that is of the candidate beam and meets the preset condition.

Step S204-12: In a case that no reference signal that is of the candidate beam and meets a preset condition is detected, the terminal reports, to the network-side device, the first indication information for indicating that the terminal detects no reference signal that is of the candidate beam and meets the preset condition.

In addition, that the terminal prohibits reporting of the first indication information in step S204 may further be: in a case that no reference signal that is of the candidate beam and meets a preset condition is detected, prohibiting, by the terminal, reporting of the first indication information.

It can be seen that in this embodiment of this application, in a case that a reference signal that is of the candidate beam and meets the preset condition is detected, the terminal may report the first indication information; and in a case that no reference signal that is of the candidate beam and meets the preset condition is detected, the terminal may report the first indication information for indicating that no reference signal that is of the candidate beam and meets the preset condition has been detected by the terminal, or the terminal may prohibit reporting of the first indication information. For example, in the foregoing case 3, in a case that the terminal detects no reference signal that is of the candidate beam and meets the preset condition within the third time period, the terminal may report the first indication information that no reference signal that is of the candidate beam and meets the preset condition is detected, or the terminal may prohibit reporting of the first indication information. In a specific application scenario, the prohibiting reporting of the first indication information may be prohibiting reporting of BFR MAC CE; in a specific application scenario, the prohibiting reporting of the first indication information may be prohibiting reporting in the first PUSCH resource usable for BFR MAC CE.

In an optional implementation of this embodiment of this application, the meeting the preset condition in the embodiments of this application means that reference signal received power or signal to interference plus noise ratio of the reference signal of the candidate beam is greater than or equal to a preset threshold configured by the network-side device. The preset threshold may be defined by a protocol in advance, or may be determined by a network-side device, or may be determined by using other manners in other scenarios. In a specific application scenario, a corresponding preset threshold is configured or determined according to an actual condition.

In addition, in another optional implementation in this embodiment of this application, after the end time point of the fourth time period, the method of this embodiment of this application may further include the following steps.

Step S206: The terminal continues to measure a reference signal resource of the candidate beam.

Step S208: In a case that a reference signal that is of the candidate beam and meets a preset condition is detected, the terminal reports, to the network-side device, the first indication information for indicating an identifier of the reference signal that is of the candidate beam and meets the preset condition.

Step S210: In a case that no reference signal that is of the candidate beam and meets a preset condition is detected, the terminal reports, to the network-side device, the first indication information for indicating that the terminal detects no reference signal that is of the candidate beam and whose quality meets the preset condition.

In this embodiment of this application, the manner of determining whether a beam fails in this application is: determining, by the terminal by performing beam failure detection on a cell and/or a bandwidth part, whether a beam failure occurs in the cell and/or the bandwidth part.

It can be learned from the foregoing cases 1 to 4 that measurement start time points and measurement end time points of preset time periods have been specified, where for some measurement time periods in the foregoing cases 1 to 4, the measurement does not necessarily start from the time point of the configuration information being received, and does not necessarily end at the time point of the first indication information being reported, but is performed in a time period between the time point of the configuration information being received and the time point of the first indication information being reported, avoiding to some extent the prior-art problem that a terminal keeps measuring a candidate beam when a channel condition is good and no beam failure has occurred for a long time. Therefore, as compared with the continuous measurement in the prior art, measuring the candidate beam within a preset time period in this embodiment of this application achieves the effect of reducing power consumption of the terminal.

Step S202 and step S204 in this embodiment of this application are illustrated below with reference to the foregoing cases 1 to 4.

For the foregoing case 1, in a specific application scenario, the candidate beam measurement method includes the following steps.

Step S11: The terminal starts to measure quality of a candidate beam reference signal at a time point of RRC configuration information for configuring a candidate beam RS being received from a network-side device, and stops measurement at a time point of first measurement stop indication information sent by the network-side device being received.

Step S12: The terminal reports a BFR MAC CE to the network-side device, where information carried by the BFR MAC CE includes:
(1) an ID of a candidate beam RS whose quality meets a preset condition; or
(2) indication information for indicating that no candidate beam RS whose quality meets a preset condition is detected.

Certainly, the measurement start time point and measurement stop time point in the foregoing step S11 are only examples of the first time period, and may still be another measurement start time point and measurement stop time point in another application scenario. In addition, in step S12, if no candidate beam RS whose quality meets a preset condition is detected, the terminal may not report the BFR MAC CE.

For the foregoing case 2, in a specific application scenario, the candidate beam measurement method includes the following steps.

Step S21: The terminal starts to measure quality of a candidate beam reference signal at a time point of measurement start indication information being received, and stops measurement at a time point of second measurement stop indication information sent by the network-side device being received.

Step S22: The terminal reports a BFR MAC CE to the network-side device, where information carried by the BFR MAC CE includes:
(1) an ID of a candidate beam RS whose quality meets a preset condition; or
(2) indication information for indicating that no candidate beam RS whose quality meets a preset condition is detected.

Certainly, the measurement start time point and measurement stop time point in the foregoing step S21 are only examples of the second time period, and may still be another measurement start time point and measurement stop time point in another application scenario. In addition, in step S22, if no candidate beam RS whose quality meets a preset condition is detected, the terminal may not report the BFR MAC CE.

For the foregoing case 3, in a specific application scenario, the candidate beam measurement method includes the following steps.

Step S31. The terminal starts to measure quality of a candidate beam reference signal at the start time point of fifth preset duration preceding the first indication information being reported, and stops measurement at a time point of the first indication information being reported.

Step S32. If the terminal detects a candidate beam RS whose quality meets a preset condition, the terminal reports a BFR MAC CE to the network-side device; and if the terminal detects no candidate beam RS whose quality meets a preset condition, the terminal reports, to the network-side device, a BFR MAC CE for indicating that no candidate beam RS whose quality meets a preset condition is detected, or prohibits reporting of a BFR MAC CE.

Certainly, the measurement start time point and measurement stop time point in the foregoing step S31 are only examples of the third time period, and may still be another measurement start time point and measurement stop time point in another application scenario.

For the foregoing case 4, in a specific application scenario, the candidate beam measurement method includes the following steps.

Step S41. The terminal starts to measure quality of a candidate beam reference signal at a time point of determining occurrence of beam failure, and stops measurement at the end time point of seventh preset duration that starts from the occurrence of beam failure being determined.

Step S42. If the terminal detects a candidate beam RS whose quality meets a preset condition, the terminal reports a BFR MAC CE to the network-side device; and if the terminal detects no candidate beam RS whose quality meets a preset condition, the terminal reports, to the network-side device, a BFR MAC CE for indicating that no candidate beam RS whose quality meets a preset condition is detected, or prohibits reporting of a BFR MAC CE.

Certainly, the measurement start time point and measurement stop time point in the foregoing step S41 are only examples of the third time period, and may still be another measurement start time point and measurement stop time point in another application scenario.

For the case of prohibiting reporting of the BFR MAC CE in the foregoing step S42, the terminal may also continue to measure the candidate beam after the end time point of the seventh preset duration, and then may determine, according to the measurement result, to report the BFR MAC CE. To be specific, if the terminal detects a candidate beam RS whose quality meets a preset condition, the terminal reports a BFR MAC CE to the network-side device; and if the terminal detects no candidate beam RS whose quality meets a preset condition, the terminal reports, to the network-side device, a BFR MAC CE for indicating that no candidate beam RS whose quality meets a preset condition is detected.

In this embodiment of this application, a time point for the terminal to measure a candidate beam is specified, such that the terminal can measure the candidate beam within the specified time period to obtain an actual measurement result, and then report the measurement result or prohibit reporting of the first indication information. To be specific, the terminal may not report the first indication information according to the measurement result so as to avoid inaccurate reported information; or if the terminal reports a measurement result, the terminal reports the first indication information used for indicating the measurement result obtained within the preset time period. In this way, the UE can report an accurate candidate beam measurement result, and in a case of beam failure, the performance and delay in beam failure recovery are guaranteed.

It should be noted that the candidate beam measurement method provided in this embodiment of this application may be executed by a candidate beam measurement apparatus or a control module, in the candidate beam measurement apparatus, for executing the candidate beam measurement method. In an embodiment of this application, a candidate beam measurement apparatus executing the candidate beam measurement method is used as an example to describe the candidate beam measurement apparatus according to the embodiments of this application.

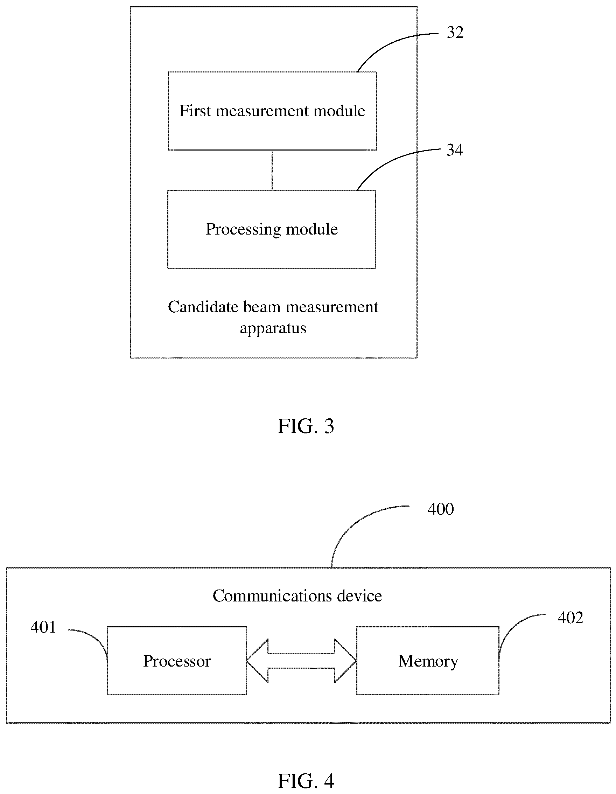

FIG. 3 is a schematic structural diagram of a candidate beam measurement apparatus according to an embodiment of this application. As shown in FIG. 3, the apparatus includes:
a first measurement module 32, configured to measure a candidate beam within a preset time period following configuration information being received, where the configuration information includes configuration information of a reference signal of the candidate beam; and
a processing module 34, configured to report first indication information to a network-side device according to a measurement result, or prohibit reporting of first indication information according to a measurement result, where the first indication information is used for indicating the measurement result.

Optionally, the preset time period in this embodiment of this application includes a first time period. A start time point of the first time period is a time point of the configuration information being received, or the start time point of the first time period is a time point following first preset duration that starts from the configuration information being received; and an end time point of the first time period is a time point of the first indication information being reported, or the end time point of the first time period is determined according to first measurement stop indication information received, where the first measurement stop indication information is used for indicating to stop measurement immediately after the first measurement stop indication information is received, or used for indicating to stop measurement in second preset duration after the first measurement stop indication information is received.

Optionally, the preset time period includes a second time period. A start time point of the second time period is determined according to measurement start indication information received, and an end time point of the second time period is determined according to second measurement stop indication information received, or the end time point of the second time period is a time point of the first indication information being reported. The measurement start indication information is used for indicating to start measurement immediately after the measurement start indication information is received, or used for indicating to start measurement in third preset duration after the measurement start indication information is received; and the second measurement stop indication information is used for indicating to stop measurement immediately after the second measurement stop indication information is received, or used for indicating to stop measurement in fourth preset duration after the second measurement stop indication information is received.

Optionally, the preset time period in this embodiment of this application includes a third time period. A start time point of the third time period is a start time point of fifth preset duration preceding the first indication information being reported by the terminal, and duration of the third time period is the fifth preset duration; and an end time point of the third time period is a time point of the first indication information being reported.

Optionally, the preset time period in this embodiment of this application includes a fourth time period. A start time point of the fourth time period is a time point of occurrence of beam failure being determined, or the start time point of the fourth time period is an end time point of sixth preset duration that starts from the occurrence of beam failure; duration of the fourth time period is the sixth preset duration; and an end time point of the fourth time period is an end time point of seventh preset duration that starts from occurrence of beam failure being determined, or the end time point of the fourth time period is a time point of the first indication information being reported.

Optionally, the first measurement module in this embodiment of this application may further include: a receiving unit, configured to receive the measurement start indication information and the measurement stop indication information that are sent by the network-side device, where the measurement stop indication information includes first measurement stop indication information or second measurement stop indication information; and a measurement unit, configured to measure the candidate beam within a preset time period according to indications of the measurement start indication information and the measurement stop indication information.

Optionally, the measurement start indication information and the measurement stop indication information in this embodiment of this application are carried by at least one of the following: radio resource control RRC signaling, media access control control element MAC CE signaling, and downlink control information DCI.

Optionally, the time point of the first indication information being reported in this embodiment of this application is at least one of the following: a time point of assembling a media access control protocol data unit MAC PDU, and a sending time point of reporting a physical uplink shared channel PUSCH that carries beam failure recovery request BFRQ information.

Optionally, the first measurement module 32 is further configured to measure quality of a reference signal resource of the candidate beam.

Optionally, the processing module 34 in this embodiment of this application may further include: a reporting unit, configured to, in a case that a reference signal that is of the candidate beam and meets a preset condition is detected, report, to the network-side device, the first indication information for indicating an identifier of the reference signal that is of the candidate beam and meets the preset condition; or a processing unit, configured to, in a case that no reference signal that is of the candidate beam and meets a preset condition is detected, report, to the network-side device, the first indication information for indicating that no reference signal that is of the candidate beam and meets the preset condition is detected.

Optionally, the processing module 34 in this embodiment of this application may further include: a prohibiting unit, configured to, in a case that no reference signal that is of the candidate beam and meets a preset condition is detected, prohibit reporting of the first indication information.

Optionally, after the end time point of the fourth time period, the apparatus in this embodiment of this application may further include: a second measurement module, configured to continue to measure the reference signal resource of the candidate beam; a first reporting module, configured to, in a case that a reference signal that is of the candidate beam and meets a preset condition is detected, report, to the network-side device, the first indication information for indicating an identifier of the reference signal that is of the candidate beam and meets the preset condition; or a second reporting module, configured to, in a case that no reference signal that is of the candidate beam and meets a preset condition is detected, report, to the network-side device, the first indication information for indicating that no reference signal that is of the candidate beam and meets the preset condition is detected.

Optionally, the meeting a preset condition means that reference signal received power or signal to interference plus noise ratio of the reference signal of the candidate beam is greater than or equal to a preset threshold configured by the network-side device.

Optionally, the apparatus in this embodiment of this application may further include: a processing module, configured to determine, by performing beam failure detection on a cell and/or a bandwidth part, whether a beam failure occurs in the cell and/or the bandwidth part.

In this embodiment of this application, a time point of measuring a candidate beam is specified, such that measurement is performed for the candidate beam within the specified time period to obtain an actual measurement result, and then the measurement result is reported or reporting of the measurement result is prohibited. To be specific, the terminal may not report the first indication information according to the measurement result so as to avoid inaccurate reported information, or if the terminal reports a measurement result, the terminal reports the first indication information used for indicating the measurement result obtained within the preset time period. In this way, the UE can report an accurate candidate beam measurement result, and in a case of beam failure, the performance and delay in beam failure recovery are guaranteed.

The candidate beam measurement apparatus in this embodiment of this application may be an apparatus, or may be a component, an integrated circuit, or a chip in the terminal. The apparatus may be a mobile terminal or a non-mobile terminal. For example, the mobile terminal may include but is not limited to the types of the terminal 11 as listed above, and the non-mobile terminal may be a server, a network attached storage (Network Attached Storage, NAS), a personal computer (personal computer, PC), a television (television, TV), an automated teller machine, a self-service machine or the like, which are not specifically limited in the embodiments of this application.

The candidate beam measurement apparatus in this embodiment of this application may be an apparatus having an operating system. The operating system may be an Android (Android) operating system, may be an iOS operating system, or may be other possible operating systems. This is not specifically limited in the embodiments of this application.

The candidate beam measurement apparatus provided in the embodiments of this application can implement the processes implemented in the method embodiment in FIG. 2, with the same technical effects achieved. To avoid repetition, details are not described herein again.

Optionally, as shown in FIG. 4, an embodiment of this application further provides a communications device 400, including a processor 401, a memory 402, and a program or instructions stored in the memory 402 and executable on the processor 401. For example, in a case that the communications device 400 is a terminal, when the program or instructions are executed by the processor 401, the processes of the foregoing embodiment of the candidate beam measurement method are implemented, with the same technical effects achieved. In a case that the communications device 400 is a network-side device, when the program or instructions are executed by the processor 401, the processes of the foregoing embodiment of the candidate beam measurement method are implemented, with the same technical effects achieved. To avoid repetition, details are not described herein again.

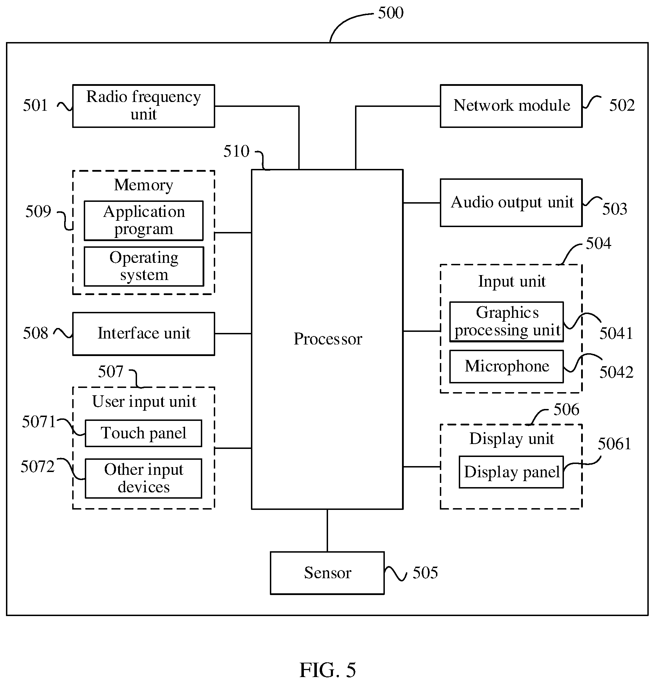

FIG. 5 is a schematic diagram of a hardware structure of a terminal for implementing the embodiments of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

It can be understood by those skilled in the art that the terminal 500 may further include a power supply (for example, a battery) supplying power to the components. The power supply may be logically connected to the processor 510 via a power management system, so that functions such as charge and discharge management and power consumption management are implemented via the power management system. The structure of the terminal shown in FIG. 5 does not constitute any limitation on the terminal, and the terminal may include more or fewer components than shown in FIG. 5, or combine some of the components, or have different arrangements of the components. Details are not described herein.

It should be understood that, in an embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in an image capture mode or a video capture mode. The display unit 506 may include the display panel 5061. The display panel 5061 may be configured in a form of a liquid crystal display, organic light-emitting diode, or the like. The user input unit 507 includes a touch panel 5071 and other input devices 5072. The touch panel 5071 is also referred to as a touchscreen. The touch panel 5071 may include two parts: a touch measurement apparatus and a touch controller. The other input devices 5072 may include but are not limited to a physical keyboard, a function button (for example, a volume control button or a power on/off button), a trackball, a mouse, and a joystick. Details are not described herein.

In an embodiment of this application, the radio frequency unit 501 transmits downlink data received from a network-side device to the processor 510 for processing, and in addition, transmits uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may mainly include a program or instruction storage area and a data storage area. The program or instruction storage area may store an operating system, an application program or instructions required for at least one function (for example, a sound play function and an image play function), and the like. Further, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The memory 509 may be, for example, at least one magnetic disk storage device, flash memory, or other volatile solid-state storage device.

The processor 510 may include one or more processing units. Optionally, an application processor and a modem processor may be integrated in the processor 510. The application processor mainly processes an operating system, a user interface, an application program or instructions, and the like. The modem processor, such as a baseband processor, mainly processes wireless communication. It can be understood that the modem processor may alternatively be not integrated in the processor 510.

The processor 510 is configured to measure a candidate beam within a preset time period following configuration information being received; and report first indication information to a network-side device according to a measurement result, where the first indication information is used for indicating the measurement result.

In this embodiment of this application, a time point for the terminal to measure a candidate beam is specified, such that the terminal can measure the candidate beam within the specified time period to obtain an actual measurement result, and then report the measurement result. To be specific, if the terminal reports the first indication information, the first indication information is used for indicating the measurement result obtained within the preset time period, so that the UE can report an accurate candidate beam measurement result, and in a case of beam failure, the performance and delay in beam failure recovery are guaranteed.

An embodiment of this application further provide a readable storage medium, where the readable storage medium stores a program or instructions, and when the program or instructions are executed by a processor, the processes of the foregoing candidate beam measurement method embodiments are implemented, with the same technical effect achieved. To avoid repetition, details are not described herein again.

The processor is the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

According to the description of the foregoing embodiments, persons skilled in the art can clearly understand that the method in the foregoing embodiments may be implemented by software in addition to a necessary universal hardware platform or by hardware only. In most cases, the former is a preferred implementation. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

It can be understood that the embodiments described in the embodiments of this disclosure may be implemented by hardware, software, firmware, middleware, microcode, or a combination thereof. For implementation with hardware, modules, units, and subunits may be implemented in one or more application specific integrated circuits (Application Specific Integrated Circuit, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions described in this disclosure, or a combination thereof.

For software implementation, the techniques described in the embodiments of this disclosure may be implemented by modules (for example, procedures or functions) that implement the functions described in the embodiments of this disclosure. Software code may be stored in the memory and executed by the processor. The memory may be implemented in or outside the processor.

The foregoing describes the embodiments of this application with reference to the accompanying drawings. However, this application is not limited to these specific embodiments. The specific embodiments are merely illustrative rather than restrictive.

## Claims

1. A candidate beam measurement method comprising
measuring, by a terminal (11), quality of a reference signal resource of a candidate beam within a preset time period following configuration information sent by a network-side device (12) being received, to obtain a measurement result, wherein the configuration information comprises configuration information of a reference signal of the candidate beam, and the preset time period is a time period between a time point of the configuration information being received by the terminal (11) and a time point of first indication information being reported by the terminal (11); and reporting (S204), by the terminal (11), the first indication information to the network-side device (12) according to the measurement result, wherein the first indication information is used for indicating the measurement result; and the time point of the first indication information being reported is a time point of assembling a media access control protocol data unit, MAC PDU; wherein
the reporting (S204), by the terminal (11), the first indication information to the network-side device (12) according to the measurement result comprises:
in a case that a reference signal that is of the candidate beam and meets a preset condition is detected, reporting, by the terminal (11) to the network-side device (12), the first indication information for indicating an identifier of the reference signal that is of the candidate beam and meets the preset condition; or
in a case that no reference signal that is of the candidate beam and meets the preset condition is detected, reporting, by the terminal (11) to the network-side device (12), the first indication information for indicating that the terminal (11) detects no reference signal that is of the candidate beam and meets the preset condition.

2. The method according to claim 1, wherein the preset time period comprises a fourth time period, wherein a start time point of the fourth time period is a time point of occurrence of beam failure being determined by the terminal (11), or the start time point of the fourth time period is an end time point of sixth preset duration that starts from the occurrence of beam failure.

3. The method according to claim 2, wherein duration of the fourth time period is the sixth preset duration.

4. The method according to claim 2, wherein an end time point of the fourth time period is an end time point of seventh preset duration that starts from occurrence of beam failure being determined by the terminal (11), or the end time point of the fourth time period is the time point of the first indication information being reported by the terminal (11).

5. The method according to claim 4, wherein the time point of the first indication information being reported further is a sending time point of reporting a physical uplink shared channel, PUSCH, that carries beam failure recovery request, BFRQ, information.

6. The method according to claim 4, wherein after the end time point of the fourth time period, the method further comprises:
continuing to measure, by the terminal (11), quality of the reference signal resource of the candidate beam;
in a case that a reference signal that is of the candidate beam and meets the preset condition is detected, reporting, by the terminal (11) to the network-side device (12), the first indication information for indicating an identifier of the reference signal that is of the candidate beam and meets the preset condition; or
in a case that no reference signal that is of the candidate beam and meets the preset condition is detected, reporting, by the terminal (11) to the network-side device (12), the first indication information for indicating that the terminal (11) detects no reference signal that is of the candidate beam and whose quality meets the preset condition.

7. The method according to claim 6, wherein the meeting the preset condition means that reference signal received power or signal to interference plus noise ratio of the reference signal of the candidate beam is greater than or equal to a preset threshold configured by the network-side device.

8. The method according to claim 2, further comprising:
determining, by the terminal (11) by performing beam failure detection on a cell and/or a bandwidth part, whether a beam failure occurs in the cell and/or the bandwidth part.

9. A terminal (500) comprising a processor (510), a memory (509), and a program or instructions stored in the memory (509) and executable on the processor (510), wherein when the program or instructions are executed by the processor (510), steps of the candidate beam measurement method according to any one of claims 1 to 8 are implemented.

10. A readable storage medium, wherein the readable storage medium stores a program or instructions, and when the program or instructions are executed by a processor (510), steps of the candidate beam measurement method according to any one of claims 1 to 8 are implemented.

11. A computer software product, wherein computer software product is stored in a non-volatile storage medium, and the software product is configured to be executed by at least one processor to implement steps of the candidate beam measurement method according to any one of claims 1 to 8.

## Patentansprüche

1. Ein Kandidatenstrahlmessverfahren, das Folgendes beinhaltet:
Messen, durch ein Endgerät (11), einer Qualität einer Referenzsignalressource eines Kandidatenstrahls innerhalb einer voreingestellten Zeitperiode im Anschluss des Empfangens von Konfigurationsinformationen, die durch eine netzwerkseitige Vorrichtung (12) gesendet werden, um ein Messergebnis zu erhalten, wobei die Konfigurationsinformationen Konfigurationsinformationen eines Referenzsignals des Kandidatenstrahls beinhalten und die voreingestellte Zeitperiode eine Zeitperiode zwischen einem Zeitpunkt des Empfangens der Konfigurationsinformationen durch das Endgerät (11) und einem Zeitpunkt des Meldens erster Anzeigeinformationen durch das Endgerät (11) ist; und Melden (S204), durch das Endgerät (11), der ersten Anzeigeinformationen an die netzwerkseitige Vorrichtung (12) gemäß dem Messergebnis, wobei die ersten Anzeigeinformationen zum Anzeigen des Messergebnisses verwendet werden; und der Zeitpunkt des Meldens der ersten Anzeigeinformationen ein Zeitpunkt des Zusammensetzens einer Medienzugriffssteuerungsprotokolldateneinheit, MAC PDU, ist; wobei das Melden (S204), durch das Endgerät (11), der ersten Anzeigeinformationen an die netzwerkseitige Vorrichtung (12) gemäß dem Messergebnis Folgendes beinhaltet:
falls ein Referenzsignal, das von dem Kandidatenstrahl ist und eine voreingestellte Bedingung erfüllt, detektiert wird, Melden, durch das Endgerät (11) an die netzwerkseitige Vorrichtung (12), der ersten Anzeigeinformationen zum Anzeigen einer Kennung des Referenzsignals, das von dem Kandidatenstrahl ist und die voreingestellte Bedingung erfüllt; oder
falls kein Referenzsignal, das von dem Kandidatenstrahl ist und die voreingestellte Bedingung erfüllt, detektiert wird, Melden, durch das Endgerät (11) an die netzwerkseitige Vorrichtung (12), der ersten Anzeigeinformationen zum Anzeigen, dass das Endgerät (11) kein Referenzsignal detektiert, das von dem Kandidatenstrahl ist und die voreingestellte Bedingung erfüllt.

2. Verfahren gemäß Anspruch 1, wobei die voreingestellte Zeitperiode eine vierte Zeitperiode beinhaltet, wobei ein Startzeitpunkt der vierten Zeitperiode ein Zeitpunkt des Auftretens des Bestimmens eines Strahlausfalls durch das Endgerät (11) ist oder der Startzeitpunkt der vierten Zeitperiode ein Endzeitpunkt einer sechsten voreingestellten Dauer ist, die mit dem Auftreten eines Strahlausfalls beginnt.

3. Verfahren gemäß Anspruch 2, wobei die Dauer der vierten Zeitperiode die sechste voreingestellte Dauer ist.

4. Verfahren gemäß Anspruch 2, wobei ein Endzeitpunkt der vierten Zeitperiode ein Endzeitpunkt einer siebten voreingestellten Dauer ist, die mit dem Auftreten des Bestimmens eines Strahlausfalls durch das Endgerät (11) beginnt, oder der Endzeitpunkt der vierten Zeitperiode der Zeitpunkt des Meldens der ersten Anzeigeinformationen durch das Endgerät (11) ist.

5. Verfahren gemäß Anspruch 4, wobei der Zeitpunkt des Meldens der ersten Anzeigeinformationen ferner ein Sendezeitpunkt des Meldens eines gemeinsam genutzten physikalischen Uplink-Kanals, PUSCH, ist, der Strahlausfallwiederherstellungsanforderungs-Informationen, BFRQ-Informationen, trägt.

6. Verfahren gemäß Anspruch 4, wobei das Verfahren nach dem Endzeitpunkt der vierten Zeitperiode ferner Folgendes beinhaltet:
Fortsetzen des Messens, durch das Endgerät (11), einer Qualität der Referenzsignalressource des Kandidatenstrahls;
falls ein Referenzsignal, das von dem Kandidatenstrahl ist und die voreingestellte Bedingung erfüllt, detektiert wird, Melden, durch das Endgerät (11) an die netzwerkseitige Vorrichtung (12), der ersten Anzeigeinformationen zum Anzeigen einer Kennung des Referenzsignals, das von dem Kandidatenstrahl ist und die voreingestellte Bedingung erfüllt; oder
falls kein Referenzsignal, das von dem Kandidatenstrahl ist und die voreingestellte Bedingung erfüllt, detektiert wird, Melden, durch das Endgerät (11) an die netzwerkseitige Vorrichtung (12), der ersten Anzeigeinformationen zum Anzeigen, dass das Endgerät (11) kein Referenzsignal detektiert, das von dem Kandidatenstrahl ist und dessen Qualität die voreingestellte Bedingung erfüllt.

7. Verfahren gemäß Anspruch 6, wobei das Erfüllen der voreingestellten Bedingung bedeutet, dass eine Referenzsignalempfangsleistung oder ein Signal-zu-Interferenzplus-Rauschen-Verhältnis des Referenzsignals des Kandidatenstrahls größer als oder gleich einem voreingestellten Schwellenwert ist, der durch die netzwerkseitige Vorrichtung konfiguriert ist.

8. Verfahren gemäß Anspruch 2, das ferner Folgendes beinhaltet:
Bestimmen, durch das Endgerät (11) durch Durchführen einer Strahlausfalldetektion an einer Zelle und/oder einem Bandbreitenteil, ob ein Strahlausfall in der Zelle und/oder dem Bandbreitenteil auftritt.

9. Ein Endgerät (500), das einen Prozessor (510), einen Speicher (509) und ein Programm oder Anweisungen, die in dem Speicher (509) gespeichert sind und auf dem Prozessor (510) ausführbar sind, beinhaltet, wobei, wenn das Programm oder die Anweisungen durch den Prozessor (510) ausgeführt werden, Schritte des Kandidatenstrahlmessverfahrens gemäß einem der Ansprüche 1 bis 8 implementiert werden.

10. Ein lesbares Speichermedium, wobei das lesbare Speichermedium ein Programm oder Anweisungen speichert und, wenn das Programm oder die Anweisungen durch einen Prozessor (510) ausgeführt werden, Schritte des Kandidatenstrahlmessverfahrens gemäß einem der Ansprüche 1 bis 8 implementiert werden.

11. Ein Computersoftwareprodukt, wobei das Computersoftwareprodukt in einem nichtflüchtigen Speichermedium gespeichert ist und das Softwareprodukt konfiguriert ist, um durch mindestens einen Prozessor ausgeführt zu werden, um Schritte des Kandidatenstrahlmessverfahrens gemäß einem der Ansprüche 1 bis 8 zu implementieren.

## Revendications

1. Un procédé de mesure de faisceau candidat comprenant
la mesure, par un terminal (11), de la qualité d'une ressource de signal de référence d'un faisceau candidat dans une période de temps prédéfinie à la suite de la réception d'informations de configuration envoyées par un dispositif côté réseau (12), pour obtenir un résultat de mesure, les informations de configuration comprenant des informations de configuration d'un signal de référence du faisceau candidat, et la période de temps prédéfinie étant une période de temps entre un point temporel de la réception des informations de configuration par le terminal (11) et un point temporel du rapport de premières informations d'indication par le terminal (11) ; et le rapport (S204), par le terminal (11), des premières informations d'indication au dispositif côté réseau (12) selon le résultat de mesure, les premières informations d'indication étant utilisées pour indiquer le résultat de mesure ; et le point temporel du rapport des premières informations d'indication étant un point temporel d'assemblage d'une unité de données de protocole de contrôle d'accès aux supports, PDU MAC ; dans lequel le rapport (S204), par le terminal (11), des premières informations d'indication au dispositif côté réseau (12) selon le résultat de mesure comprend :
dans le cas où un signal de référence qui est du faisceau candidat et satisfait à une condition prédéfinie est détecté, le rapport, par le terminal (11) au dispositif côté réseau (12), des premières informations d'indication pour indiquer un identifiant du signal de référence qui est du faisceau candidat et satisfait à la condition prédéfinie ; ou
dans le cas où aucun signal de référence qui est du faisceau candidat et satisfait à la condition prédéfinie n'est détecté, le rapport, par le terminal (11) au dispositif côté réseau (12), des premières informations d'indication pour indiquer que le terminal (11) ne détecte aucun signal de référence qui est du faisceau candidat et satisfait à la condition prédéfinie.

2. Le procédé selon la revendication 1, dans lequel la période de temps prédéfinie comprend une quatrième période de temps, un point temporel de début de la quatrième période de temps étant un point temporel de détermination de survenue d'une défaillance de faisceau par le terminal (11), ou le point temporel de début de la quatrième période de temps étant un point temporel de fin d'une sixième durée prédéfinie qui débute à partir de la survenue d'une défaillance de faisceau.

3. Le procédé selon la revendication 2, dans lequel la durée de la quatrième période de temps est la sixième durée prédéfinie.

4. Le procédé selon la revendication 2, dans lequel un point temporel de fin de la quatrième période de temps est un point temporel de fin d'une septième durée prédéfinie qui débute à partir de la détermination de la survenue d'une défaillance de faisceau par le terminal (11), ou le point temporel de fin de la quatrième période de temps est le point temporel du rapport des premières informations d'indication par le terminal (11).

5. Le procédé selon la revendication 4, dans lequel le point temporel du rapport des premières informations d'indication est en outre un point temporel d'envoi de rapport d'un canal partagé de liaison montante physique, PUSCH, qui transporte des informations de demande de récupération de défaillance de faisceau, BFRQ.

6. Le procédé selon la revendication 4, après le point temporel de fin de la quatrième période de temps, le procédé comprenant en outre :
la poursuite de la mesure, par le terminal (11), de la qualité de la ressource de signal de référence du faisceau candidat ;
dans le cas où un signal de référence qui est du faisceau candidat et satisfait à la condition prédéfinie est détecté, le rapport, par le terminal (11) au dispositif côté réseau (12), des premières informations d'indication pour indiquer un identifiant du signal de référence qui est du faisceau candidat et satisfait à la condition prédéfinie ; ou
dans le cas où aucun signal de référence qui est du faisceau candidat et satisfait à la condition prédéfinie n'est détecté, le rapport, par le terminal (11) au dispositif côté réseau (12), des premières informations d'indication pour indiquer que le terminal (11) ne détecte aucun signal de référence qui est du faisceau candidat et dont la qualité satisfait à la condition prédéfinie.

7. Le procédé selon la revendication 6, dans lequel la satisfaction de la condition prédéfinie signifie que la puissance reçue de signal de référence ou le rapport signal sur interférence plus bruit du signal de référence du faisceau candidat est supérieur(e) ou égal(e) à un seuil prédéfini configuré par le dispositif côté réseau.

8. Le procédé selon la revendication 2, comprenant en outre :
la détermination, par le terminal (11) en effectuant une détection de défaillance de faisceau sur une cellule et/ou une partie de bande passante, si une défaillance de faisceau survient dans la cellule et/ou la partie de bande passante.

9. Un terminal (500) comprenant un processeur (510), une mémoire (509), et un programme ou des instructions stocké(es) dans la mémoire (509) et exécutable(s) sur le processeur (510), lorsque le programme ou les instructions est/sont exécuté(es) par le processeur (510), des étapes du procédé de mesure de faisceau candidat selon l'une quelconque des revendications 1 à 8 étant mises en œuvre.

10. Un support de stockage lisible, le support de stockage lisible stockant un programme ou des instructions, et lorsque le programme ou les instructions est/sont exécuté(es) par un processeur (510), des étapes du procédé de mesure de faisceau candidat selon l'une quelconque des revendications 1 à 8 étant mises en œuvre.

11. Un produit logiciel informatique, le produit logiciel informatique étant stocké dans un support de stockage non volatil, et le produit logiciel étant configuré pour être exécuté par au moins un processeur pour mettre en œuvre des étapes du procédé de mesure de faisceau candidat selon l'une quelconque des revendications 1 à 8.
